# EUROPEAN PATENT APPLICATION

(11) **EP 1 179 549 A1**
(43) Date of publication of application: **13.02.2002**
(21) Application number: 00202820.7
(22) Date of filing: 11.08.2000
(51) Int. Cl.: C08F 8/30, C08L 63/00, C08G 73/02

(54) **Polyamines as crosslinker for binder compositions which may be used in the preparation of coating compositions**

(71) Applicant: Akzo Nobel N.V., 6824 BM Arnhem (NL)
(72) Inventor: Hobel, Klaus, 6861 BP Oosterbeek (NL); Noomen, Arie, 2215 BM Voorhout (NL); Van Den Berg, Jan Keimpe, 2171 PS Sassenheim (NL)
(74) Representative: Schalkwijk, Pieter Cornelis, c.s.

(57) **Abstract**

Claimed is a water-soluble or water-dispersible polyamine having at least two primary amino groups and an average molecular weight in the range of 200-20,000, for use as crosslinker in a binder composition comprising an amine crosslinkable resin, wherein the polyamine is obtainable by reaction of a polyepoxide with an amino compound having at least two active hydrogen atoms at a ratio of at most 0.5 equivalent of active hydrogen atoms per epoxide equivalent, followed by conversion of the residual epoxy groups with ammonia.

## Description

The invention pertains to a water-soluble or water-dispersible polyamine having at least two primary amino groups and an average molecular weight in the range of 200-20,000, as crosslinker for binder compositions comprising an amine crosslinkable resin, which may be used in the preparation of coating compositions.
A polyamine of the type indicated above is known from, int. al., WO94/15974.
The polyamines disclosed therein comprise an oligomeric backbone having pendant therefrom at least two sterically hindered amino groups, and have a molecular weight (Mn) in the range of 200-10,000.
Said polyamines are used as crosslinkers both in solvent based and in water borne coating compositions. However, in water borne coating compositions the known polyamines are prone to hydrolysis. No or hardly any hydrolysable polyamines which comprise at least two reactive amino hydrogens per molecule and have a molecular weight up to 5,000 are disclosed in EP-A-172 460. A disadvantage of the oxygen-containing polyamines disclosed therein is their toxicity. Moreover, their resistance to atmospheric action detracts from the performance.
The invention now provides polyamines which are less prone to hydrolysis and are less toxic than the known and commercially available polyoxyalkylene polyamines.

The polyamines according to the invention are characterised in that the polyamine is obtainable by reaction of a polyepoxide with an amino compound having at least two active hydrogen atoms at a ratio of at most 0.5 equivalent of active hydrogen atoms per epoxide equivalent, followed by conversion of the residual epoxy groups with ammonia.

Though the molecular weights of the obtained polyamines generally are in the range of 800 up to 20,000, they remain water-soluble and/or water-dispersible. A surprising feature of the new polyamines according to the invention is that the use of said polyamines in aqueous coating compositions comprising acryloyl-functional dispersions resulted both in quite an acceptable pot life/cure speed relationship at ambient and in low stoving temperatures (e.g., < 100°C), with reduced emissions and an overall lower VOC and, in certain cases, better appearance characteristics. The same was found when the polyamines were used in water borne coating compositions comprising amine crosslinkable resins containing activated unsaturated groups, activated methylene groups, cyclic carbonate groups, epoxy groups and/or isocyanate groups.
Also provided according to the invention is a process for preparing a polyamine as disclosed hereinbefore, wherein an amino compound is gradually added to a polyepoxide, optionally dissolved in an organic solvent, at a ratio of at most 0.5 equivalent of active hydrogen atoms per epoxide equivalent at a temperature in the range of 20 to 60°C, followed by conversion of the resulting tertiary amino groups-containing polyepoxide with a molar excess of ammonia.
As examples of suitable difunctional or polyfunctional epoxy compounds, which as such may be solid or liquid, may be mentioned the diglycidyl or polyglycidyl ethers of (cyclo)aliphatic or aromatic hydroxyl compounds, such as ethylene glycol, glycerol, cyclohexane diol, and mononuclear or polynuclear difunctional or trifunctional phenols and bisphenols such as bisphenol-A and bisphenol-F; epoxidised aliphatic and/or cycloaliphatic alkenes, such as dipentene dioxide, dicyclopentadiene dioxide, and vinyl cyclohexene dioxide. Thus far good results have been obtained with difunctional epoxides selected from the group of bisphenol A diglycidyl ether, 1,4-butanediol diglycidyl ether, 1,6-hexanediol diglycidyl ether, and neopentylglycol diglycidyl ether. In order to ensure homogeneous epoxide distribution in the reaction medium, the epoxide is diluted with a solvent, e.g., a lower alcohol, such as methanol, ethanol and/or isopropyl alcohol.
Preferred polyamine compounds suitable for preparing the compounds according to the invention are selected from the group of 1,10-decane diamine, 1,12-dodecane diamine, and isophorone diamine. Optionally, use may be made of a monoamino compound such as a fatty amine.
After the reaction product of a polyepoxide with a polyamine has been formed, it is added to a molar excess of a liquid aqueous ammonia solution, which is optionally diluted with a lower alcohol, followed by the evaporation of all volatiles.
Thus far optimum results have been obtained when the ammonia concentration in the aqueous ammonia solution is between 6 and 25 wt.%. For preparation on an industrial scale preference is given to a process wherein use is made of substantially anhydrous liquid ammonia at a temperature of at most about -33°C or higher if use is made of an autoclave. In this manner higher amine numbers can be obtained, even when use is made of the same molar excess of NH₃.

The coating composition of the present invention may be applied to any substrate. The substrate may be, for example, metal, plastic, wood, glass, ceramic, or some other coating layer. The other coating layer may be comprised of the coating composition of the current invention or it may be a different coating composition. The coating compositions of the current invention show particular utility as clear coats, base coats, pigmented top coats, primers, and fillers. The coating compositions can be applied by conventional means such as by spray gun, brush, or roller, spraying being preferred. Curing temperatures preferably are between 0 and 80°C and more preferably between 20 and 60°C. The compositions are particularly suitable in the preparation of coated metal substrates, such as in the refinish industry, in particular the body shop, to repair automobiles and transportation vehicles, and in finishing large transportation vehicles such as trains, trucks, buses, and aeroplanes.

In the case of the coating composition being a clear coat, the base coat may be a conventional base coat known in the coating art. Examples are solvent borne base coats, e.g., Autobase® ex Sikkens, based on cellulose acetobutyrate, acrylic resins, and melamine resins, and water borne base coats, e.g., Autowave® ex Sikkens, based on an acrylic resin dispersion and polyester resin. Furthermore, the base coat may comprise pigments (colour pigments, metallics and/or pearls), wax, solvents, flow additives, neutralising agents, and defoamers. Also high solids base coats can be used. The clear coat composition is applied to the surface of a base coat and then cured. An intermediate curing step for the base coat may be introduced.

The invention will be illustrated with reference to the following examples. Of course these examples are submitted for a better understanding of the invention only; they are not to be construed as limiting in any manner the scope thereof.

In the following examples, the preparation of a number of polyamine crosslinkers according to the invention and their use in the preparation of water borne binder compositions are disclosed. Molecular weight determinations were carried out by gel permeation chromatography on a Waters 2690 instrument, equipped with a Waters 2410 refractive index detector unit and a column type PL1000, available from Polymer Laboratories. Tetrahydrofuran with 0.5 wt.% acetic acid served as eluent. The system was calibrated with a polystyrene standard.
Particle sizes of dispersions were determined with a Coulter LS230 particle size analyser. Viscosities were measured on a Brookfield CAP 2000 viscometer. Solids contents were determined with a Sartorius MA 30 moisture analyser at a temperature of 140°C.

### Preparation of crosslinkers

### Example 1

### Preparation of crosslinker (A) from hexanediol diglycidyl ether and 1,12-diaminododecane.

a) A 2-litre 4-neck flask was fitted with a stirrer, thermocouples in combination with a controller and a heating mantle, a condenser, a nitrogen inlet and outlet, and an addition funnel. In the flask were placed 198 g of 1-methoxy-2-propanol and 122 g of a technical grade 1,6-hexanediol diglycidyl ether (available from Prümmer Polymer Chemie, Germany, under the trade name Polypox R18). Via the addition funnel a solution of 12.0 g of 1,12-diaminododecane in 197 g of 1-methoxy-2-propanol was added to the flask in 0.5 hour. After completion of the addition the contents of the flask were heated to 65°C and kept at this temperature for four hours before being cooled to room temperature. A clear colourless solution was obtained.
b) A 3 I flask was equipped with a stirrer, a thermocouple, a condenser, a nitrogen inlet and outlet, and an addition funnel. In the flask were placed 790 g of a 25 wt.% aqueous solution of ammonia and 684 g of 2-propanol. Over two hours the solution described under a) was added to the flask. The clear reaction mixture was stirred for another 14 hours at room temperature. Then virtually all volatiles were distilled off on a rotary evaporator to leave a resin-like residue with an amine number of 246 mg KOH/g.
   The polyamine was dissolved in water to give a clear solution of 52% solids content.

### Example 2

### Preparation of crosslinker (B) from hexanediol diglycidyl ether and 1,10-diaminodecane

a) A 2-litre 4-neck flask was fitted with a stirrer, thermocouples in combination with a controller and a heating mantle, a condenser, a nitrogen inlet and outlet, and an addition funnel. In the flask were placed 198 g of 1-methoxy-2-propanol and 122 g of a technical grade 1,6-hexanediol diglycidyl ether (available from Prümmer Polymer Chemie, Germany, under the trade name Polypox R18). Via the addition funnel a solution of 10.3 g of 1,10-diaminodecane in 197 g of 1-methoxy-2-propanol was added to the flask in 0.5 hour. After completion of the addition the contents of the flask were heated to 65°C and kept at this temperature for four hours before being cooled to room temperature. A clear colourless solution was obtained.
b) A 3 I flask was equipped with a stirrer, a thermocouple, a condenser, a nitrogen inlet and outlet, and an addition funnel. In the flask were placed 790 g of a 25 wt.% aqueous solution of ammonia and 684 g of 2-propanol. Over two hours the solution described under a) was added to the flask. The clear reaction mixture was stirred for another 14 hours at room temperature. Then virtually all volatiles were distilled off on a rotary evaporator to leave a resin-like residue with an amine number of 230 mg KOH/g.
   The polyamine was dissolved in water to give a clear solution of 49% solids content.

### Example 3

### Preparation of crosslinker (C) from hexanediol diglycidyl ether and isophorone diamine

a) A 5-litre 4-neck flask was fitted with a stirrer, thermocouples in combination with a controller and a heating mantle, a condenser, a nitrogen inlet and outlet, and an addition funnel. In the flask were placed 1,316 g of 1-methoxy-2-propanol and 810.5 g of a technical grade 1,6-hexanediol diglycidyl ether (available from Prümmer Polymer Chemie, Germany, under the trade name Polypox R18). Via the addition funnel a solution of 67.9 g of isophorone diamine in 1,316 g of 1-methoxy-2-propanol was added to the flask in one hour. After completion of the addition the contents of the flask were heated to 65°C and kept at this temperature for four hours before being cooled to room temperature. A clear colourless solution was obtained.
b) A 10 I flask was equipped with a stirrer, thermocouple, a condenser, a nitrogen inlet and outlet, and an addition funnel. In the flask were placed 2,634 g of a 25 wt.% aqueous solution of ammonia and 2,280 g of 2-propanol. Over two hours 1,755 g of the solution described under a) were added to the flask. The clear reaction mixture was stirred for another 14 hours at room temperature. Then virtually all volatiles were distilled off on a rotary evaporator to leave a resin-like residue with an amine number of 219 mg KOH/g.
   The polyamine was dissolved in water to give a clear solution of 50% solids content.

### Preparation of an amine-reactive acryloyl-functional polyurethane dispersion

An acryloyl-functional polyurethane dispersion was prepared from an acryloyl-functional diol (1), a polyester diol (2), a hydrophilic polyester (3), and a polyisocyanate.

### a) Preparation of the acryloyl-functional diol (1)

A 2-litre 4-neck flask was fitted with a variable speed stirrer, a thermocouple, and a dry air inlet via the headspace, and a dip tube, oil heating bath, and light protection of the flask. In the flask were placed 573 g of hydrogenated Bisphenol-A-diglycidyl ether (Eponex1510 from Shell), 17.5 g of acrylic acid, and 0.56 g of 2,6-di-tert.-butyl-4-methyl phenol. The mixture was heated to 95°C while bubbling with dry air. This bubbling was continued during the whole synthesis. A mixture of 157.7 g of acrylic acid, 0.56 g of 2,6-di-tert.-butyl-4-methyl phenol, and 0.75 g of chromium-2-ethylhexanoate was added dropwise over three hours. The reaction mixture temperature was controlled between 95-100°C. Stirring at this temperature was continued until the acid value of the reaction mixture had dropped below 5 mg KOH/g. The prepared adduct was cooled and diluted with 97 g of dry 2-butanone.

### b) Preparation of the polyester diol (2)

A 2-litre 4-neck flask was fitted with a variable speed stirrer, thermocouples in combination with a controller, a distillation column, a condenser, a nitrogen sparge, and a heating mantle. In the flask were placed 462.0 g of hexahydrophthalic anhydride, 354.6 g of 1,6-hexane diol, 156.3 g of neopentyl glycol, and 1.5 g of phosphoric acid. The mixture was heated to 230°C with stirring and under nitrogen flow and kept at this temperature for four hours with water being distilled off. Then the mixture was allowed to cool to room temperature. A clear, colourless polyester was obtained with an acid number of 3 mg KOH/g, a hydroxyl number of 180 mg KOH/g.

### c) Preparation of the hydrophilic polyester (3)

A 3-litre 4-neck flask was fitted with a variable speed stirrer, thermocouples in combination with a controller, a distillation column, a condenser, a nitrogen sparge, and a heating mantle. In the flask were placed 332 g of hexahydrophthalic anhydride and 1,614 g of polyethylene glycol monomethyl ether having an average molecular weight of 750. The mixture was heated to 170°C for 30 minutes, cooled to 140°C, and 269 g of di(trimethylol propane) were added, followed by 132 g of xylene and 3.3 g of a 85% aqueous phosphoric acid solution. The mixture was heated to 235°C and water was azeotropically distilled off until the acid value of the reaction mixture was below 5 mg KOH/g. The mixture was then cooled to 180°C and xylene was distilled off at reduced pressure. The resulting polyester diol solidified at room temperature and had an acid value of 3.9 mg KOH/g and a hydroxyl value of 59 mg KOH/g.

### d) Preparation of the acryloyl-functional polyurethane dispersion

A 2-litre 4-neck flask was fitted with a variable speed stirrer, thermocouples in combination with a controller, a condenser, a dry air inlet and outlet, and a heating mantle. In the flask were placed 181.6 g of the acryloyl-functional diol (1), 177.2 g of the polyester diol (2), 63.6 g of the hydrophilic polyester (3), 117.6 g of a caprolactone capped hydroxyethylacrylate (available from Union Carbide under the tradename Tone M 100), 20.4 g of dimethylol propionic acid, 1.7 g of 2,6-di-tertiarybutyl-4-methyl phenol, 360.0 g of 2-butanone, and 261.8 g of 4,4'-methylene-bis-(cyclohexyl isocyanate) (available from Bayer under the trade name Desmodur W). The contents of the flask were heated to 45°C and stirred for 15 minutes. Then 1.05 g of tin (II)octanoate were added. The reaction mixture exothermed to 85°C.

Subsequently, the mixture was kept at 80°C for one hour, after which time an additional portion of 1.05 g tin (II)octanoate was added. Stirring at 80°C was continued for two more hours. After this time the isocyanate content of the reaction mixture was below 0.1 wt.%. The resin was cooled to 45°C and 14.0 g of dimethyl ethanolamine were added. Five minutes after the addition of the dimethyl ethanolamine, the stirrer was set to the highest speed and the addition of 1,000 g of water was started. The water was added at 45°C in one hour. After addition of the water a white emulsion had formed. A distillation unit was attached to the flask and a mixture of 2-butanone and water was distilled off. During distillation the pressure was gradually lowered to 45 mbar. Distillation was continued until the distillate contained no more 2-butanone.
Analytical data: particle size 143 nm, Mw 4,300, Mn 19,300, solids content 41.7%.

### Preparation of the coating compositions

The aqueous acryloyl-functional polyurethane dispersion was mixed with the polyamine crosslinkers (A) and (B) to form coating compositions X and Y, respectively, in a ratio C=C : NH = 1:1 according to the invention, and with the polyetheramine Jeffamine JT403® , a polyamine cross-linker (D) commercially available from Huntsman, to form coating composition Z according to the prior art.

The "pot life", i.e. the time elapsed after the viscosity had doubled, for all coating compositions was more than one hour.
The mixtures of the acryloyl dispersion and the polyamine components were applied onto steel plate panels in a dry layer thickness between 60 and 80 µm. The panels were allowed to dry at ambient (room) temperature (RT) for one week.
The Persoz Hardness of the obtained coating layers was determined in accordance with French industrial standard method NF T30-016, the result being expressed in seconds.
The resistance to methylethyl ketone and water was determined after 1 and 7 days of ageing and exposure for one minute (methylethyl ketone) or for one hour (water). In the resistance test 0 stands for dissolved, 3 for slightly affected, and 5 for excellent.
After 7 days all coating layers exhibited excellent water resistance.
The adhesion was determined after 1 and 7 days of ageing by means of the cross-cut test. In said test 0 stands for complete loss of film, and 10 for complete adhesion.
The appearance of all coating layers was OK.
The properties of the obtained coating layers are given in Table 1.

**Table 1**

| Composition | Persoz Hardness (sec) after ageing during | | Resistance to methylethylketone (MEK) after ageing during | | Resistance to water after ageing during | |
|---|---|---|---|---|---|---|
| | 1 day | 7 days | 1 day | 7 days | 1 day | 7 days |
| X | 49 | 78 | 2 | 3 | 4 | 5 |
| Y | 53 | 93 | 2 | 2-3 | 3 | 5 |
| Z* | 58 | 76 | 1 | 2 | 3 | 5 |

| | | | | | | |
|---|---|---|---|---|---|---|
| * Comparative example | | | | | | |

Use in composition X of a same amount by weight of an epoxy resin resulted in better adhesion to steel plate. For the amine-functional crosslinker use was made of a 150% excess of polyamine B from Example 2.

The epoxy resins used were:
epoxy resin 1, a 51.1 wt.% epoxy resin-containing aqueous emulsion with an equivalent weight of 1,041.6, available under code no. 124QB35 from Akzo Nobel in Bergen op Zoom, The Netherlands,
epoxy resin 2, a 56 wt.% epoxy resin-containing emulsion in isopropyl alcohol with an equivalent weight of 550.8, available under code no. Araldite PZ 3962 from Ciba, Switzerland, and
epoxy resin 3, a 63 wt.% epoxy resin-containing emulsion in water with an equivalent weight of 397, available under code no. RTC-7-15445-14 from Dow Chemical.

The properties of the obtained coating layers are given in Table 2.

**Table 2**

| Composition | Persoz Hardness (sec) after ageing during 7 days | Adhesion after ageing during | | Resistance to water after ageing during | | Resistance to MEK after ageing during 7 days and exposure during 30 sec |
|---|---|---|---|---|---|---|
| | | 1 day | 7 days | 1 day | 7 days | |
| X | 78 | 2 | 3 | 3 | 4-5 | 3 |
| X + epoxy resin 1 | 66 | 6 | 7 | 3 | 2-3 | 3 |
| X + epoxy resin 2 | 59 | 2 | 3 | 2 | 2-3 | 3-4 |
| X + epoxy resin 3 | 112 | 10 | 10 | 3 | 3-4 | 4-5 |

## Claims

1. Water-soluble or water-dispersible polyamine having at least two primary amino groups and an average molecular weight in the range of 200-20,000, for use as crosslinker in a binder composition comprising an amine crosslinkable resin, **characterised in that** the polyamine is obtainable by reaction of a polyepoxide with an amino compound having at least two active hydrogen atoms at a ratio of at most 0.5 equivalent of active hydrogen atoms per epoxide equivalent, followed by conversion of the residual epoxy groups with ammonia.

2. Polyamine according to claim 1, **characterised in that** the polyepoxides are di- and/or trifunctional epoxides.

3. Polyamine according to claim 2, **characterised in that** the difunctional epoxides are selected from the group of bisphenol A diglycidyl ether, 1,4-butanediol diglycidyl ether, 1,6-hexanediol diglycidyl ether, and neopentyl glycol diglycidyl ether.

4. Polyamine according to claim 1, **characterised in that** the amino compounds having at least two active hydrogen atoms are selected from the group of fatty amines, 1,10-decane diamine, 1,12-dodecane diamine, and isophorone diamine.

5. Polyamine according to claim 1, **characterised in that** optionally use is made of a minor amount of a monoamino compound.

6. Polyamine according to claim 5, **characterised in that** the monoamino compound is a fatty amine.

7. Water borne binder composition wherein use is made of the polyamine according to claim 1.

8. Use of the binder composition according to claim 7 in a water borne coating composition.

9. Process for preparing a polyamine according to claim 1, **characterised in that** an amino compound is gradually added to a polyepoxide, optionally dissolved in an organic solvent, at a ratio of at most 0.5 equivalent of active hydrogen atoms per epoxide equivalent at a temperature in the range of 20 to 60°C, followed by conversion of the resulting tertiary amino groups-containing polyepoxide with a molar excess of ammonia.

10. Process according to claim 9, **characterised in that** the reaction product of a polyepoxide with a polyamine is added to a molar excess of a liquid aqueous ammonia solution, which is optionally diluted with a lower alcohol, followed by the evaporation of all volatiles.

11. Process according to claim 10, **characterised in that** the concentration of ammonia in the aqueous ammonia solution is between 6 and 25 wt. %.
